# EUROPÄISCHE PATENTANMELDUNG

(11) **EP 0 780 448 A1**
(43) Veröffentlichungstag der Anmeldung: **25.06.1997**
(21) Anmeldenummer: 96120219.9
(22) Anmeldetag: 17.12.1996
(51) Int. Cl.: C09D 5/24, C09D 163/00, C08J 7/04

(54) **Wässrige Überzugsmittel, Verfahren zum Beschichten von Kunststoffsubstraten und Verwendung der Überzugsmittel**

(30) Priorität: 22.12.1995 DE 19548215
(71) Anmelder: Herberts Gesellschaft mit beschränkter Haftung, 42285 Wuppertal (DE)
(72) Erfinder: Schreiber, Peter, Dr., 45529 Hattingen (DE); Windmann, Reinhard, 42279 Wuppertal (DE); Hüber, Dieter, 50170 Kerpen (DE); Goecke, Stefanie, 58256 Ennepetal (DE)
(74) Vertreter: Türk, Gille, Hrabal, Leifert

(57) **Zusammenfassung**

Die Erfindung betrifft ein wäßriges Überzugsmittel auf der Basis von Epoxidharzen zur Beschichtung von Kunststoffsubstraten. Es enthält
7,5 bis 25 Gew.-% eines oder mehrerer Epoxidharze,
1,5 bis 10 Gew.-% eines oder mehrerer wassermischbarer Polyamine,
0 bis 10 Gew.-% eines oder mehrerer clorierter und/oder nicht chlorierter Polyolefine,
1 bis 35 Gew.-% elektrisch leitfähiger Pigmente und/oder Füllstoffe,
5 bis 25 Gew.-% eines oder mehrerer organischer Lösemittel und
35 bis 60 Gew.-% Wasser enthält,
wobei die Summe der vorgenannten Bestandteile 100 Gew.-% beträgt und das Überzugsmittel weiterhin lackübliche Additive, Pigmente und/oder Füllstoffe und gegebenenfalls weitere Bindemittel enthält.

Die Erfindung betrifft auch ein Verfahren zum Beschichten von Kunststoffsubstraten und die Verwendung des Überzugsmittels.

## Beschreibung

Die Erfindung betrifft wäßrige Überzugsmittel auf der Basis von Epoxidharzen zur Beschichtung von Kunstoffsubstraten, Verfahren zum Beschichten von Kunststoffsubstraten und die Verwendung der Überzugsmittel.

In der Autoindustrie werden zunehmend Formteile aus Kunststoffsubstraten verwendet. Derartige Kunststoffformteile bestehen aus Polypropylenen oder anderen Thermoplasten oder Duromeren. Insbesondere die Verwendung von Polypropylenen in reiner Form oder in modifizierter Form (PP-Blends) wird immer umfassender aufgrund der exzellenten Eigenschaften im Vergleich mit anderen Kunststoffen. Sie können mit Uni- oder Effektfarbtönen mit oder ohne Vorbehandlung beschichtet werden.

Die insbesondere bei der Beschichtung von Kunststoffteilen aus Polypropylen auftretenden Schwierigkeiten im Außeneinsatz wie ungleichmäßige Filmbildung sowie mangelhafte Substrathaftung können überwunden werden durch physikalisch-chemische Vorbehandlungsprozesse wie beispielsweise Beflammen oder Niederdruckplasmaaktivierung, wodurch eine polare und somit problemlos beschichtbare Substratoberfläche erzeugt werden kann. Verwendet wurden hierfür bisher Beschichtungssysteme mit hohem Lösemittelgehalt.

Des weiteren existieren Beschichtungssysteme, die in organischen Lösemitteln gelöste chlorierte Polyolefine allein oder in einem filmbildenden Polymer enthalten (US-A 4,303,697, US-A 4,070,421, US-A 3,597,489). Die chlorierten Polyolefine bewirken eine ausgezeichnete Haftung insbesondere auf Polypropylensubstraten. Eine Vorbehandlung der Kunststoffsubstrate ist daher nicht erforderlich. Die Chlorierung ermöglicht eine ausreichende Löslichkeit in organischen Lösemitteln wie z.B. Toluol oder Xylol.

Die chlorierten Polyolefine sind auch in wäßrigen Überzugssystemen einsetzbar, die im allgemeinen geringe Mengen an organischen Lösemitteln enthalten und u.a. als Grundierungsmittel einsetzbar sind. In WO90-12 056, WO90-12 656 und WO93-01 244 werden wäßrige Zusammensetzungen beschrieben, die chlorierte Polyolefine enthalten, auf Kunststoffsubstrate aufgetragen werden können und danach mit Folgeüberzugsmitteln beschichtet werden können. Durch Zusatz von beispielsweise Polyurethanharzen können aus den wäßrigen Zusammensetzungen Überzugsmittel hergestellt werden. Die wäßrigen Überzugssysteme zeigen jedoch Probleme bezüglich der Wasserfestigkeit und Haftung auf dem Substrat, was zu Fehlern in der Lackhaftung der Folgeschichten führt und somit zu optischen und mechanischen Schäden.

Laut DE 44 07 121 werden wäßrige Beschichtungssysteme auf der Basis von Epoxidharzen mit Polyaminen als Vernetzer für Kunststoffsubstrate verwendet, die chlorierte Polyolefine enthalten und nahezu lösemittelfrei sind. Sie sind als Grundierungsmittel einsetzbar und gewährleisten eine gute Haftung bei erhöhten und niedrigen Temperaturen sowie bei Beanspruchung durch Wasser.

Auf die in der genannten Weise beschichteten Kunststoffteile können in üblicher Weise Nachfolgeschichten appliziert werden, durch beispielsweise Spritzen, Rollen, Tauchen. Für die Verwendung elektrostatischer Applikationsverfahren zum Aufbringen der Nachfolgeschichten sind die beschriebenen Beschichtungssysteme für Kunststoffsubstrate, insbesondere Polyolefinsubstrate, aufgrund der fehlenden Polarität nicht geeignet.

Eine ausreichende Polarität von Beschichtungen auf Kunststoffteilen für ein elektrostatisches Nachfolgebeschichten kann erreicht werden durch die Verwendung elektrisch leitfähiger Grundierungen bzw. Primer. Diese enthalten beispielsweise elektrisch leitfähigen Ruß oder Graphit (Glasurit-Handbuch der BASF F + L AG, 1984, Seite 606 bis 607). Die Verwendung derartiger leitfähiger Lacke ist jedoch nachteilig wegen ihres Gehaltes an organischem Lösemittel.

Aus der US-A-4 981 730 sind Grundierungen für Kunststoffsubstrate bekannt, die wasserdispergierbare oder emulgierbare Olefinpolymere, nicht-ionische und anionische Tenside, organische Lösemittel und Wasser enthalten. Die Überzugsmittel können Vernetzerharze zur Reaktion mit funktionellen Gruppen eines vernetzbaren Harzes in einer über der Grundierung angeordneten weiteren Überzugsschicht enthalten. Als Beispiele dieser Vernetzerharze werden Aminoplastharze, Urethanharze, Acrylharze, Epoxidharze, Alkydharze, Phenolformaldehydharze und deren Mischungen genannt. Die Überzugsmittel können auch leitfähige Pigmente enthalten.

Aus der EP-A-0 466 136 ist ein wäßriges Überzugsmittel für Kunststoffsubstrate bekannt, das als Bindemittel eine Mischung aus einem Olefinharz, einem Urethanharz und einem Epoxidharz enthält. Das Überzugsmittel kann elektrisch leitfähige Pulver und als Neutralisierungsmittel gegebenenfalls Polyamine enthalten.

Aufgabe der vorliegenden Erfindung ist es, Überzugsmittel für Polyolefin-Substrate, insbesondere Polypropylen-Blends zur Verfügung zu stellen, die wäßrig sind und neben einer guten Haftung eine elektro-statische Applikation von Nachfolgeschichten ermöglichen. Des weiteren soll der Einsatz von chlorierten Polyolefinen vermindert werden.

Die Aufgabe wird gelöst durch ein Überzugsmittel auf der Basis von vernetzenden wasserverdünnbaren Zweikomponenten (2K-)Harzsystemen, die ggf. chlorierte und/oder nichtchlorierte Polyolefine und geringe Anteile an organischem Lösemittel enthalten.

Das erfindungsgemäß Überzugsmittel ist dadurch gekennzeichnet, daß es enthält
- 7,5 bis 25 Gew.-%: eines oder mehrerer Epoxidharze
- 1,5 bis 10 Gew.-%: eines oder mehrerer wassermischbarer Polyamine
- 0 bis 10 Gew.-%: eines oder mehrerer chlorierter und/oder nicht-chlorierter Polyolefine
- 1 bis 35 Gew.-%: elektrisch leitfähiger Pigmente und/oder Füllstoffe
- 5 bis 25 Gew.-%: eines oder mehrerer organischer Lösemittel und
- 35 bis 60 Gew.-%: Wasser,
wobei die Summe der vorgenannten Bestandteile 100 Gew.-% ergibt und das Überzugsmittel weiterhin lackübliche Additive, Pigmente und/oder Füllstoffe und ggf. weitere Bindemittel enthält. Die vorstehenden Gew.-% beziehen sich, sofern sie Harze betreffen, auf den Harzfestkörper. Das Überzugsmittel enthält als Hauptlösemittel Wasser.

Das erfindungsgemäße Überzugsmittel soll als Zweikomponenten-Überzugsmittel vorliegen und erst unmittelbar vor der Applikation gemischt und in eine verarbeitungsfähige Form überführt werden. In der einen Komponente sind die Epoxidanteile und in der anderen Komponente die Polyaminvernetzeranteile enthalten. Unwesentlich ist dabei, ob die Polyolefine, die Lösemittel, ggf. weitere Bindemittel, die leitfähigen Pigmente sowie ggf. weitere Pigmente bzw. Additive in der Epoxidharzkomponente oder in der Aminoharzkomponente vorliegen. Zu beachten ist jedoch die Gewährleistung der Lagerstabilität der einzelnen Komponenten. Es hat sich als günstig erwiesen, die Pigmente in der Aminkomponente und die Polyolefinanteile bevorzugt in der Epoxikomponente vorzulegen.

Die beiden Komponenten des Überzugsmittels weisen eine überraschend hohe Lagerstabilität auf, die bis zu einem Jahr betragen kann.

Die Mengenverhältnisse der leitfähigen Pigmente und/oder Füllstoffe sind so zu wählen, daß eine ausreichend Nachfolgebeschichtung durch elektrostatische Applikation erfolgen kann. Der Mengenanteil dieser Pigmente liegt in einem Bereich von 1 bis 35 Gew.-%. Bevorzugt sind die leitfähigen Pigmente in einer Menge von 1 bis 25 Gew.-% verwendbar.

Die Mengenverhältnisse zwischen Epoxidkomponente und Aminkomponente werden so gewählt, daß das Verhältnis der reaktiven H-Atome der Vernetzerkomponente zu den Epoxidgruppen der Epoxidkomponente von 0,5:1 bis 1,5:1 beträgt, bevorzugt von 0,9:1 bis 1,3:1. Ggf. zusätzlich enthaltende Bindemittel sind im wesentlichen an der Vernetzungsreaktion nicht beteiligt.

Die Viskosität des applikationsfertigen Überzugsmittels kann durch Verdünnen mit Wasser auf den gewünschten Bereich eingestellt werden.

Man erhält ein Überzugsmittel, das bei Raumtemperatur bereits vernetzt.

Um die Vernetzung zu beschleunigen, können Katalysatoren zugesetzt werden, oder es wird die Trockungstemperatur erhöht. Bevorzugt sind Temperaturen von 60 bis 100°C.

Die Epoxidharzkomponenten der erfindungsgemäß einsetzbaren wäßrigen Epoxidharzdispersion können handelsübliche wasserverdünnbare Di- oder Polyepoxide sein. Sie werden als wäßrige Dispersionen oder wäßrige Lösungen eingesetzt. Bevorzugt werden nichtchlorierte Epoxidharze eingesetzt.

Beispiele für derartige Polyepoxide sind Polyglycidylether auf der Basis von aliphatischen und/oder aromatischen Diolen, wie beispielsweise Bisphenol A, Bisphenol F, Novolake oder Polyalkylenglykole, die über funktionelle OH-Gruppen mit epoxidgruppenhaltigen Verbindungen, wie Epichlorhydrin umgesetzt werden können. Weitere Beispiele für Polyepoxidverbindungen sind Umsetzungsprodukte von aromatischen Diphenolen mit aromatischen Polycarbonsäuren, z.B. Phthal- oder Terephthal- oder Trimellithsäure, zu Polyestern. Diese werden beispielsweise mit 2,3-Epoxipropanol zu den Epoxidverbindungen umgesetzt.

Weitere Beispiele sind glycidylfunktionalisierte (Meth)acrylpolymere. Dabei können die glycidylfunktionellen Monomeren einpolymerisiert werden, z.B. über Glycidyl-(meth)acrylat, oder es werden OH-haltige Acrylate nach der Polymerisation über die OH-Gruppe zu epoxidhaltigen Verbindungen modifiziert. Die Polymere können ggf. über weitere ungesättigte Comonomere, die einreagiert werden können, in ihren Eigenschaften variiert werden.

Die Epoxidharze sind bevorzugt so aufgebaut, daß eine Wasserverdünnbarkeit gegeben ist. Das kann durch Einreagieren von hydrophilen Gruppen geschehen, wie nicht-ionischen Gruppen, z.B. Polyetherstrukturen, Polyolstrukturen oder durch einreagierte ionische Gruppen. Es ist auch möglich, die Epoxidharze mit zusätzlichen ionischen oder nicht-ionischen selbstemulgierenden Epoxidharzen in die Wasserphase zu überführen. Bevorzugt ist die Verwendung von Epoxidharzdispersionen, die nur selbstemulgierende Epoxidharze enthalten, so daß der Einsatz von zusätzlichen Emulgatoren nicht erforderlich ist. Beispiele für derartige wäßrige Epoxidharzdispersionen sind in der DE-A 36 43 751, DE-A 30 20 301, US-A 4,987,163 sowie DE 44 07 121 beschrieben.

Es ist jedoch auch möglich, Emulgatoren zuzusetzen, wobei dieser Zusatz möglichst gering sein soll. Insgesamt soll die Summe der Emulgatoren der einzelnen Bestandteile der Beschichtungszusammensetzung unter 0,5 % liegen.

Das Zahlenmittel des Molekulargewichtes der Epoxidharze beträgt bevorzugt bis zu 50000. Die untere Grenze beträgt 350. Die verwendbaren Epoxidharze können somit als flüssige (bei Temperaturen bis zu 30°C) oder als feste Substanzen vorliegen. Der Einsatz fester Epoxidharze ist bevorzugt. Das Epoxidäquivalentgewicht beträgt 250 bis 10000.

Als vernetzende Komponente des erfindungsgemäßen Zweikomponenten-Überzugsmittels werden allgemein übliche Polyamin-Verbindungen eingesetzt. Sie können in weiten Grenzen variiert werden. Sie enthalten reaktive Aminogruppen und ggf. weitere die Wasserlöslichkeit erhöhende funktionelle Gruppen. Die vernetzenden Polyamine können niedermolekular sein, sie können aber auch filmbildende Eigenschaften haben. Es muß eine ausreichende Anzahl von reaktiven Gruppen vorhanden sein. Das Äquivalentgewicht pro aktives Wasserstoffatom liegt bevorzugt bei 50 bis 500, besonders bevorzugt bei 100 bis 400. Das Molekulargewicht kann in weiten Grenzen schwanken, solange Reaktivität und Wasserlöslichkeit bzw. Wasserdispergierbarkeit gegeben sind. Bevorzugt ist ein zahlenmittleres Molekulargewicht von 500 bis 20000.

Die Polyamin-Vernetzerkomponente wird entsprechend ihrer Wasserverdünnbarkeit bzw. Wasserlöslichkeit ausgewählt, hervorgerufen durch die Anzahl der polaren Gruppen, wie beispielsweise OH-Gruppen, Aminogruppen, Harnstoffgruppen oder Polyetherstrukturen. Die Vernetzerkomponente kann als wäßrige Dispersion eingesetzt werden. Bevorzugt sind Polyaminharze auf aliphatischer Basis. Die geeigneten Polyamine enthalten zwei oder mehr primäre und/oder sekundäre Aminogruppen. Gegebenenfalls können andere funktionelle Gruppen vorhanden sein. Beispiele für geeignete Polyamine sind in der EP-A 0 240 083 oder der EP-A 0 346 982 beschrieben.

Polyaminharze können auch aminofreie Polymere sein, die nachträglich durch Modifizierung mit Aminogruppen im Überschuß umgesetzt werden, beispielsweise umgesetzte Polyglycidylether.

Des weiteren können Polyaminisocyanataddukte eingesetzt werden. Dazu werden übliche Polyisocyanate mit Polyamid in einer solchen Menge umgesetzt, daß nach der Reaktion eine ausreichende Anzahl reaktiver Aminogruppen vorhanden ist.

Weiterhin können Polyaminaddukte aus acrylungesättigten Verbindungen verwendet werden, beispielsweise beschrieben in US-4,303,563, EP-A 0 262 720, EP-A 0 179 954.

Die erfindungsgemäße Zusammensetzung kann ggf. chlorierte und/oder nichtchlorierte Polyolefine enthalten.

Als chlorierte Polyolefine können handelsübliche Materialien einzeln oder im Gemisch eingesetzt werden. Es handelt sich insbesondere um chloriertes Polyethylen, chloriertes Polypropylen oder chlorierte Copolymere davon mit einem Chlorierungsgrad von vorzugsweise 10 bis 35 %. Das zahlenmittlere Molekulargewicht der chlorierten Polyolefine beträgt bevorzugt 700 bis 70000. Die chlorierten Polyolefine können modifiziert eingesetzt werden, z.B. durch Einbau polarer Gruppen wie beispielweise Maleinsäureanhydrid. Sie können als organisch gelöstes Harzpulver oder als wäßrige Suspension bzw. Emulsion eingesetzt werden.

Um den Gehalt an chlorierten Polyolefinen im erfindungsgemäßen Überzugsmittel zu senken, bzw. zu eliminieren, können alternativ nichtchlorierte Polyolefine beispielsweise entsprechend DE 43 08 349 und JP 03 122 125 oder Polyolefin-Acrylat-Copolymerisate entsprechend DE 44 32 985 mit einem mittleren Molekulargewicht von 1000 bis 50000 eingesetzt werden. Gegebenenfalls können diese Polymere ebenfalls modifiziert sein, z.B. durch Einbau polarer Gruppen wie beispielsweise Maleinsäureanhydrid und Acrylsäure.

Die nicht-chlorierten Polyolefine können allein oder im Gemisch mit den chlorierten Polyolefinen zum Einsatz kommen.

Die chlorierten und die unchlorierten Polyolefine können als wäßrige Dispersionen eingesetzt werden. Dabei können diese Dispersionen aufgrund der Herstellung noch geringe Anteile an organischen Lösemitteln aufweisen sowie Anteile an ionischen oder nicht-ionischen Emulgatoren enthalten. Beispielsweise kann der Polyolefinanteil im Überzugsmittel in Form einer Dispersion analog der WO93/01 244 oder der WO90/12 056 zugesetzt werden. Der Anteil der Emulgatoren soll so gering wie möglich gehalten werden.

Als organische Lösemittel sind beispielsweise die üblichen lacktechnischen Lösemittel geeignet. Die Menge an organischem Lösemittel soll möglichst gering gehalten werden. Beispiele für verwendbare Lösemittel sind Ketone, Kohlenwasserstoffe, Alkohole, Glykolether, z.B. Xylol, Toluol, Mesitylen, Benzylalkohol.

Die erfindungsgemäßen Überzugsmittel enthalten elektrisch leitfähige Pigmente und/oder Füllstoffe. Dies können Pigmente oder Füllstoffe auf anorganischer oder organischer Basis sein. Eingesetzt werden können kommerziell erhältliche deckende und transparente elektrisch leitfähige Pigmente und/oder Füllstoffe, wie sie beispielsweise zur antistatischen Ausrüstung von polymeren Beschichtungsstoffen für Geräte, Flächen und Bauteile bekannt sind. Dies können sein leitfähig beschichtetes Bariumsulfat, dotiertes Zinndioxid, dotiertes Zinkoxid, (dotiert beispielsweise mit Aluminium, Gallium, Antimon und Wismut) leitfähig beschichtetes Kaliumtitanat sowie leitfähige Ruß-Typen und Titandioxid-Typen. Diese können nach Applikation des erfindungsgemäßen Überzugsmittels auf dem Substrat schwarze bis weiße Färbungen ergeben, beispielsweise bei Verwendung von Ruß- oder Titandioxidtypen. Durch Beimischung von Buntpigmenten können ggf. weitere Färbungen erzielt werden. Bevorzugt sind helle Färbungen.

Die Pigmente können entweder in der Epoxidharzdispersion oder besonders bevorzugt in der Aminkomponente angerieben werden. Gegebenenfalls ist es möglich, Insbesondere bei schwer zu dispergierenden Pigmenten wie beispielsweise Rußtypen, eine Plgmentpaste zu benutzen unter Verwendung zusätzlicher Bindemittel (Anreibeharze), z.B. auf Polyurethan-, Polyacrylat-, Polyether- und Polyesterharzbasis. Darin werden die Pigmente fein dispergiert. Die dazu notwendigen Aggregate und Vorgehensweisen sind dem Fachmann geläufig.

Leitfähige Pigmente können in einem Gehalt von 1 Gew.-% bis 35 Gew.-% in der erfindungsgemäßen Zusammensetzung enthalten sein. Bevorzugt werden 1 bis 5 Gew.-% bei dunklen bis schwarzen Pigmenten und 5 bis 25 Gew.-% bei grauen bis hellen Pigmenten eingesetzt.

Gegebenenfalls können die Überzugsmittel weitere Pigmente sowie Additive enthalten. Als Additive sind die üblichen lacktechnischen Additive verwendbar wie Netzmittel, Dispergierhilfsmittel, Antischaummittel, verlaufsfördernde Mittel, Katalysatoren, Rheologieadditive sowie Antikratermittel.

Gegebenenfalls können in den Überzugsmitteln noch weitere Bindemittel vorhanden sein, die bevorzugt nicht mit den vernetzenden Komponenten reagieren. Dies können beispielsweise wäßrige Polyurethan-, Polyester-, Copolymerisat-Dispersionen oder wäßrige Dispersionen aus Mischungen derartiger Harze sein, die mit der Epoxidharzdispersion verträglich sind. Es ist auch möglich, diese Dispersionen gemeinsam mit dem Aminvernetzer einzusetzen.

Zur Anwendung des 2K-Überzugsmittels wird je eine Mischung der beiden Komponenten mit den weiteren erfindungsgemäßen Bestandteilen hergestellt. Diese werden unmittelbar vor der Applikation miteinander gemischt. Das resultierende Überzugsmittel ist sofort verarbeitungsfähig.

Als Substrate dienen bevorzugt Kunststoffsubstrate, insbesondere modifizierte oder nicht-modifizierte Polyolefine-Substrate. Beispiele hierfür sind insbesondere Polyethylen- oder Polypropylensubstrate sowie Substrate aus Copolymeren oder Mischungen davon.

Das Überzugsmittel wird auf das vorzugsweise nicht vorbehandelte Substrat ggf. nach dessen Reinigung aufgetragen. Danach wird der Überzug chemisch vernetzt, ggf. kann das durch erhöhte Temperatur bis zu 100°C unterstützt werden. Die Vernetzungstemperatur des Überzugsmittels kann je nach der Temperaturempfindlichkeit des Substrats ausgewählt werden, da die erfindungsgemäßen Überzugsmittel über einen breiten Temperaturbereich vernetzen können. Bevorzugt ist ein Temperaturbereich von 60 bis 100°C. Nach dem Vernetzen erhält man homogen beschichtete Kunststoffsubstrate mit einer störungsfreien Oberfläche. Die erhaltenen Überzüge zeichnen sich durch eine hohe Wasserfestigkeit, eine gute Haftung zum Substrat trotz Senkung des Gehaltes an chlorierten Polyolefinen (CPO) bzw. Verwendung unchlorierter Polyolefine sowie eine gute Kälteschlagzähigkeit aus.

Gemäß einer weniger bevorzugten Ausführungsform der Erfindung werden in der Beschichtungszusammensetzung keine chlorierten bzw. keine nichtchlorierten Polyolefine eingesetzt. In diesem Fall werden die Polyolefin-Kunststoffsubstrate zur Erzielung einer guten Haftung der erfindungsgemäßen Überzüge einer Vorbehandlung mit den üblichen Methoden wie Beflammen oder Niederdruckplasmaaktivierung unterzogen.

Die erfindungsgemäßen Überzugsmittel werden insbesondere als leitfähige Haftgrundierungen eingesetzt. Auf die daraus resultierende leitfähige Kunststoffbeschichtung können dann weitere Überzüge z.B. Basislack/Klarlacküberzüge oder Unidecklacke unter Verwendung elektrostatischer Applikationsmethoden aufgetragen werden. Diese ermöglichen im Vergleich zu den herkömmlichen Applikationsmethoden eine deutliche Reduzierung von Overspray.

Die erhaltenen Mehrschichtaufbauten zeigen eine sehr gute Haftung zum Substrat, eine gute Kälteelastizität und keine Enthaftungserscheinungen bei Belastung durch Feuchtigkeit. Sie können ohne zusätzlichen Haftprimer sowie ggf. ohne zusätzliche Vorbehandlung des Substrates verwendet werden.

Die folgenden Beispiele dienen der Erläuterung der Erfindung.

### Beispiel 1:

### Herstellung einer elektrisch leitfähigen Titandioxidpaste

Zu 35,2 Teilen eines handelsüblichen Dispergieradditivs werden der Reihe nach 25,6 Teile Butylglykol, 1,8 Teile einer 10 %-igen wäßrigen Dimethylethanolamin-Lösung sowie 5,1 Teile VE-Wasser gegeben. Zu dieser Vorlage werden 31,5 Teile eines handelsüblichen elektrisch leitfähigen Titandioxids sowie 0,8 Teile eines handelsüblichen Entschäumers unter Rühren zugegeben und 20 Minuten vordispergiert. Nach Quellung über Nacht erfolgt die Hauptdispergierung in einem diskontinuierlich arbeitenden Dispergieraggregat.

### Beispiel 2

### Herstellung einer elektrisch leitfähigen Bariumsulfat-Paste

Zu 13,8 Teilen eines handelsüblichen Dispergieradditivs werden der Reihe nach 12,0 Teile Butylglykol, 17,2 Teile Wasser, 4,3 Teile einer 10 %-igen wäßrigen Dimethylethanolamin-Lösung (DMEA-Lösung) sowie 0,2 Teile eines handelsüblichen Entschäumers gegeben. Dazu kommen unter Rühren 2,5 Teile eines handelsüblichen elektrisch leitfähigen Bariumsulfats. Es wird 20 Minuten vordispergiert und nach Quellung über Nacht dispergiert entsprechend Beispiel 1.

### Beispiel 3

### Herstellung einer elektrisch leitfähigen Ruß-Paste

Zu 21,3 Teilen eines handelsüblichen Dispergieradditivs werden 18,6 Teile Butylglykol, 26,6 Teile Wasser, 6,6 Teile einer 10 %-igen wäßrigen DMEA-Lösung, 0,3 Teile eines handelsüblichen Entschäumers, 17,3 Teile eines handelsüblichen Leitrusses sowie 9,3 Teile DMEA-Lösung unter Rühren gegeben. Die Dispergierung erfolgt entsprechend Beispiel 1.

### Beispiel 4

### Herstellung einer Titandioxid-Paste

Zu 9,7 Teilen eines handelsüblichen Dispergieradditivs werden 8,4 Teile Butylglykol, 3,0 Teile einer 10 %-igen wäßrigen DMEA-Lösung sowie 12,4 Teile Wasser gegeben. Zu dieser Vorlage werden unter Rühren 66,3 Teile eines handelsüblichen Titandioxids und 0,2 Teile eines handelsüblichen Entschäumers gegeben. Die Dispergierung erfolgt gemäß Beispiel 1.

### Beispiel 5

### Herstellung eines erfindungsgemäßen Überzugsmittels

Zu einer Vorlage von 46 Teilen der Paste aus Beispiel 4 werden 12 Teile der Paste aus Beispiel 3 unter Rühren gefügt. Hierzu wird zuerst eine Mischung aus 14,1 Teilen einer kommerziell erhältlichen nicht-ionischen Polyurethandispersion (aliphatische Isocyanat- und Polyesterbausteine, Festkörper 40 %), 1 Teil Methylpyrrolidon sowie einer Mischung aus 10 Teilen eines handelsüblichen aliphatischen Polyamins, 1,9 Teilen Propylenglykoldimethylether und 1,8 Teilen Wasser unter Rühren zugegeben. Komplettiert wird mit 0,6 Teilen Dimethylethanolamin, 1,9 Teilen eines handelsüblichen Verdickers (20 %-ig in Wasser, Acrylatbasis) sowie 7,5 Teilen Wasser.

Zu 97 Teilen einer Epoxydharzdispersion (auf Basis Bisphenol A) werden 3 Teile Xylol gemischt.

Aus 100 Teilen der pigmentierten Aminharzkomponente und 45 Teilen der Epoxidharzkomponente wird ein Überzugsmittel hergestellt und ggf. mit wenig Wasser auf eine Verarbeitungsviskosität von 30 bis 40 DIN-4-Becher-Sekunden vor Spritzapplikation eingestellt.

### Beispiel 6

### Herstellung eines erfindungsgemäßen Überzugsmittels

Zu einer Vorlage von 43,2 Teilen der Paste aus Beispiel 1 werden 25 Teile der Paste aus Beispiel 2 unter Rühren gegeben. Hierzu werden unter Rühren 23 Teile einer kommerziell erhältlichen CPO-Emulsion (20 %-ig in Wasser) gefügt und mit einer Mischung aus 5,6 Teilen eines handelsüblichen aliphatischen Polyamins und 1,1 Teilen Propylglykoldimethylether versehen. Komplettiert wird mit 1,7 Teilen eines handelsüblichen Verdickers (30 %-ig in Wasser, Acrylatbasis) und 0,4 Teilen DMEA.

Zu 97 Teilen einer Epoxydharzdispersion (auf Basis Bisphenol A) werden 3 Teile Xylol gemischt.

Aus 100 Teilen der pigmentierten Aminharzkomponente und 30 Teilen der Epoxidharzkomponente wird ein Überzugsmittel hergestellt und ggf. mit wenig Wasser auf eine Verarbeitungsviskosität von 30 bis 40 DIN-4-Becher-Sekunden vor Spritzapplikation eingestellt.

### Beispiel 7

### Herstellung eines erfindungsgemäßen Überzugsmittels

Zu einer Vorlage, bestehend aus 16,2 Teilen Wasser, 3,6 Teilen Butylglykol, 3,2 Teilen zweier handelsüblicher unterschiedlicher Dispergieradditive und 6,5 Teilen eines handelsüblichen aliphatischen Polyamins, werden zuerst 2,9 Teile eines handelsüblichen Leitrusses, dann 9,7 Teile eines handelsüblichen Titandioxids zugegeben und nach Verdünnung mit 14 Teilen Wasser 10 Minuten bei maximal 35°C vordispergiert. Hierzu werden 1,4 Teile eines handelsüblichen nicht-ionischen Emulgators (10 %-ig in Wasser) eingerührt. Unter möglichst hoher Scherbelastung wird eine Lösung aus 1,2 Teilen einer handelsüblichen CPO-Emulsion (20 %-ig in Wasser) und 4,8 Xylol eindispergiert, bevor die gesamte Vorlage dann in einem kontinuierlichen Dispergierprozeß bei maximal 35°C homogenisiert und stabilisiert wird. Nach Abkühlung wird mit 2,8 Teilen eines handelsüblichen Verdickers (20 %-ig in Wasser, Acrylatbasis) und 0,6 Teilen DMEA komplementiert und mit Wasser langsam unter Rühren auf eine DIN-4-Becher-Viskosität von circa 60 bis 70 Sekunden eingestellt.

Es werden 54 Teile einer Epoxydharzdispersion (auf Basis Bisphenol A) mit 6 Teilen eines handelsüblichen nicht-ionischen Emulgators (10 %-ig in Wasser) vermischt. Hierzu wird bei maximaler Scherung eine Lösung aus 7,8 Teilen einer CPO-Emulsion (20 %-ig in Wasser) und 23,2 Teilen Xylol gegeben und etwa 1/2 Stunde dispergiert. Nach etwa 12 Stunden wird mit 6 Teilen Wasser komplettiert.

Aus 100 Teilen der pigmentierten Aminharzkomponente und 66 Teilen der Epoxidharzkomponente wird ein Überzugsmittel hergestellt und ggf. mit wenig Wasser auf eine Verarbeitungsviskosität von 30 bis 30 DIN-4-Becher-Sekunden vor Spritzapplikation eingestellt.

### Beispiel 8

### Herstellung der Haftgrundierung

Die Überzugsmittel aus Beispiel 5 bis 7 werden mittels Druckkesselapplikation auf das vorgereinigte (entfettete), nicht vorbehandelte Substrat (handelsübliche Polypropylen-Blends, z.B. Keltan TP 0550, Keltan TP 2632, Hostacom X-4305, Statiol XPR 486) mit einer Trockenfilmdicke von 20 bis 30 µm aufgebracht. Die Trocknung erfolgt 30 Minuten bei 80°C im Umluftofen. Die jeweils per Federzungenelektrode gemessene Oberflächenwiderstandmeßwerte liegen bei circa 2,5 bis 40 KOhm (DIN 53482). Danach wird ein handelsüblicher Decklack (bestehend aus einem Zweischichtsystem von Basis- und Klarlack) elektrostatisch appliziert. Die Prüfung auf Haftung zu Nachfolgeschichten (DIN 531, inkl. Tesabandabrißtest), Feuchtraumbeständigkeit (DIN 500 17 KK) und Elastizität bei niedrigen Temperaturen (DIN 534 43, Teil 2) zeigen sehr gute Resultate.

## Patentansprüche

1. Wäßriges Überzugsmittel auf der Basis von Epoxidharzen zur Beschichtung von Kunststoffsubstraten, dadurch gekennzeichnet, daß es
7,5 bis 25 Gew.-% eines oder mehrerer Epoxidharze,
1,5 bis 10 Gew.-% eines oder mehrerer wassermischbarer Polyamine,
0 bis 10 Gew.-% eines oder mehrerer clorierter und/oder nichtchlorierter Polyolefine,
1 bis 35 Gew.-% elektrisch leitfähiger Pigmente und/oder Füllstoffe,
5 bis 25 Gew.-% eines oder mehrerer organischer Lösemittel und
35 bis 60 Gew.-% Wasser enthält,
wobei die Summe der vorgenannten Bestandteile 100 Gew.-% beträgt und das Überzugsmittel weiterhin lackübliche Additive, Pigmente und/oder Füllstoffe und gegebenenfalls weitere Bindemittel enthält.

2. Überzugsmittel nach Anspruch 1, dadurch gekennzeichnet, daß der Anteil der elektrisch leitfähigen Pigmente und/oder elektrisch leitfähigen Füllstoffe 1 bis 25 Gew.-% beträgt.

3. Überzugsmittel nach Anspruch 1 oder 2, dadurch gekennzeichnet, daß das Verhältnis der reaktiven Wasserstoffatome der Polyamine zu den Epoxidgruppen der Epoxidharze 0,5 : 1 bis 1,5 : 1 beträgt.

4. Überzugsmittel nach Anspruch 3, dadurch gekennzeichnet, daß das Verhältnis der reaktiven Wasserstoffatome der Polyamine zu den Epoxidgruppen der Epoxidharze 0,9 : 1 bis 1,3 : 1 beträgt.

5. Überzugsmittel nach einem der Ansprüche 1 bis 4, dadurch gekennzeichnet, daß das zahlenmittlere Molekulargewicht der Epoxidharze 350 bis 50000 beträgt.

6. Überzugsmittel nach einem der Ansprüche 1 bis 5, dadurch gekennzeichnet, daß das Epoxidequivalentgewicht der Epoxidharze 250 bis 10000 beträgt.

7. Überzugsmittel nach einem der Ansprüche 1 bis 6, dadurch gekennzeichnet, daß das Equivalentgewicht der Polyamine bezogen auf aktiven Wasserstoff 50 bis 500 beträgt.

8. Überzugsmittel nach Anspruch 7, dadurch gekennzeichnet, daß das Equivalentgewicht der Polyamine bezogen auf aktiven Wasserstoff 100 bis 400 beträgt.

9. Überzugsmittel nach einem der Ansprüche 1 bis 8, dadurch gekennzeichnet, daß die Polyamine ein zahlenmittleres Molekulargewicht von 500 bis 20000 aufweisen.

10. Verfahren zum Beschichten von Kunststoffsubstraten, dadurch gekennzeichnet, daß ein Überzugsmittel nach einem der Ansprüche 1 bis 8 auf ein Kunststoffsubstrat aufgebracht wird und die erhaltene Überzugsschicht gehärtet wird.

11. Verfahren nach Anspruch 10, dadurch gekennzeichnet, daß auf die Überzugsschicht mindestens eine weitere Überzugsschicht unter Anwendung eines elektrostatischen Applikationsverfahrens aufgebracht wird.

12. Verwendung eines Überzugsmittels nach einem der Ansprüche 1 bis 10 zur Beschichtung von Kunststoffsubstraten.

13. Verwendung nach Anspruch 12, dadurch gekennzeichnet, daß das Überzugsmittel zur Herstellung einer Haftgrundierschicht verwendet wird, auf die mindestens eine weitere Überzugsschicht aufgebracht wird.
